# EUROPÄISCHE PATENTSCHRIFT

(11) **EP 3 792 541 B1**
(45) Veröffentlichungstag und Bekanntmachung des Hinweises auf die Patenterteilung: **19.07.2023**
(21) Anmeldenummer: 20198521.5
(22) Anmeldetag: 07.08.2015
(51) Int. Cl.: F16L 5/08, F16L 5/14, H02G 3/22

(54) **VERWENDUNG EINER DICHTUNG ZUM ABDICHTEN GEGEN MEDIENLEITUNGEN FÜR EINE HAUSEINFÜHRUNG, INSBESONDERE MEHRSPARTENHAUSEINFÜHRUNG**
USE OF A GASKET FOR SEALING AGAINST MEDIA LINES FOR A HOUSE FEED-IN, IN PARTICULAR MULTI-SECTION HOUSE FEED-IN
UTILISATION D'UN JOINT D'ÉTANCHÉITÉ CONTRE LES CONDUITES DE FLUIDES POUR TRAVERSÉE DE FAÇADE DE BÂTIMENT, EN PARTICULIER TRAVERSÉE DE FAÇADE DE BÂTIMENT À PLUSIEURS SECTIONS

(30) Priorität: 18.08.2014 DE 202014006692 U
(43) Veröffentlichungstag der Anmeldung: 17.03.2021
(62) Teilanmeldung aus: 15180130.5
(73) Patentinhaber: DOYMA GmbH & Co, 28876 Oyten (DE)
(72) Erfinder: Wagner, Thomas, 27777 Ganderkesee (DE)
(74) Vertreter: Eisenführ Speiser

(56) Entgegenhaltungen:
- WO-A1-2013/160776
- DE-A1-102004 025 148
- DE-A1-102007 032 891
- DE-U1- 9 102 824
- DE-U1-202011 102 722

## Beschreibung

Die vorliegende Erfindung betrifft eine Verwendung einer Dichtung zum Abdichten gegen Medienleitungen mit einem im Wesentlichen kreisrunden Querschnitt, wobei die Dichtung eine Durchgangsrichtung für Medienleitungen aufweist, zumindest teilweise aus einem elastisch komprimierbaren Material besteht, und dazu eingerichtet ist, mittels Verspannen der Dichtung in Durchgangsrichtung eine Dichtwirkung zu erzeugen, und wobei die Dichtung mindestens eine in einer Schnittebene quer zur Durchgangsrichtung außermittig angeordnete Durchgangsöffnung zur Aufnahme von Medienleitungen und/oder Spannmitteln mit einem im Wesentlichen kreisrunden Querschnitt in Durchgangsrichtung aufweist.

Die Erfindung betrifft solche Dichtungen, die eingerichtet sind zur Verwendung als Dichteinsatz in einer korrespondierenden Aufnahme einer Hauseinführung, insbesondere Mehrspartenhauseinführung.

Die Erfindung betrifft ferner solche Dichtungen, die eingerichtet sind zur Verwendung als Dichteinsatz in einem Durchbruch einer Gebäudewand, insbesondere Hauswand.

Dichtungen der vorgenannten Art werden in Gebäuden dazu verwendet, Medienleitungen, die von außen in das Gebäude hinein verlegt werden, gegen die leitungsführenden Hauseinführungen oder Durchbrüche in den Gebäudewänden abzudichten. Die Hauseinführungen oder Durchbrüche werden zu diesem Zweck in den Gebäudewänden oder auch in Bodenplatten vorgesehen. Hauseinführungen werden eingelassen, befestigt und gegen die jeweilige Öffnung in der Bewandung abgedichtet.

Im Falle der Durchführung der Medienleitungen unmittelbar durch einen Durchbruch werden die vorgenannten Dichtungen zwischen die Medienleitung(en) und den Durchbruch gesetzt, um dort abzudichten.

Im Rahmen der Erfindung werden unter Medienleitungen insbesondere Rohrleitungen für Fluide, (flüssig und/oder gasförmig), Stromkabel, Datenkabel oder Lichtwellenleiter verstanden.

Um im Falle der Verwendung von Hauseinführungen die Medienleitungen wiederum ohne Leckage nach innen führen zu können, weisen die Hauseinführungen, und insbesondere die sogenannten Mehrspartenhauseinführungen, Aufnahmen auf, in die verschiedene Dichtungen eingesetzt werden können, wobei die Maße der Dichtungen jeweils an die durchzuführenden Medienleitungen angepasst sind.

Für jeden Leitungstyp gibt es spezielle Dichtungen bzw. Dichteinsätze. Zum Befestigen und Erzeugen der Dichtfunktion werden die Dichtungen in Durchgangsrichtung, also bezogen auf die Medienleitungen in axialer Richtung verspannt. Dazu weisen die Dichtungen ein komprimierbares Material auf, oder bestehen aus diesem, welches infolge der axialen Verspannung seitlich ausweicht, also quer zur Durchgangsrichtung, und sich dichtend einerseits gegen die Aufnahme und andererseits gegen die Medienleitung legt. Es gibt sowohl Dichtungen mit nur einer einzigen Durchgangsöffnung als auch Dichtungen, die jeweils mehrere Durchgangsöffnungen aufweisen. Die Durchgangsöffnungen können mittig oder außermittig in den Dichtungen angeordnet sein. Außermittig meint hierbei die Platzierung in einer Querschnittsebene senkrecht zur Durchgangsrichtung.

Insbesondere bei Dichtungen mit außermittig angeordneten Durchgangsöffnungen hat sich im Stand der Technik gezeigt, dass die Dichtungen trotz eigentlich korrekt dimensionierter Durchgangsöffnungen nach dem Verspannen der Dichtung in der Aufnahme der Hauseinführung oder im Durchbruch undicht sein können. Um diesem Problem zu begegnen, wurde in der Vergangenheit üblicherweise das Maß der Durchgangsöffnung für eine bestimmte Medienleitung unter deren Maß verringert. Hierdurch wird ein Übermaß erzeugt, welches auch im verspannten Zustand noch die Dichtigkeit zwischen Medienleitung und Hauseinführung bzw. Durchbruch gewährleisten soll. Wenngleich diese Vorgehensweise im Prinzip zuverlässig ist, wird dennoch der Montageaufwand, der hiermit zwangsläufig verbunden ist, als nachteilig empfunden.

Aus DE 10 2007 032891 A1 ist ein Dichtelement aus einem elastischen Material zum Einsetzen in eine Wandöffnung bekannt. Das Dichtelement weist eine außermittig angeordnete Hauptdurchführung zum Hindurchführen einer Leitung auf. Die Hauptdurchführung weist dabei einen runden oder ovalen Querschnitt auf, der jeweils an den Querschnitt der aufzunehmenden Leitung angepasst ist.

Der vorliegenden Erfindung lag somit die Aufgabe zugrunde, die Verwendung einer Dichtung der eingangs bezeichneten Art dahingehend zu verbessern, dass der Montageaufwand reduziert wird, ohne die Zuverlässigkeit hinsichtlich der Dichtfunktion zu beeinträchtigten.

Die Erfindung löst die ihr zugrundeliegende Aufgabe bei einer Verwendung einer Dichtung der eingangs bezeichneten Art mit den Merkmalen von Anspruch 1. Insbesondere weist die erfindungsgemäße Dichtung eine oder mehrere Durchgangsöffnungen auf, die im unverspannten Zustand in der Schnittebene oval oder polygonal geformt ist bzw. sind, wobei die ovale oder polygonale Durchgangsöffnung die geringste lichte Weite entlang einer Nebenachse und die größte lichte Weite entlang einer Hauptachse aufweist, und die Durchgangsöffnung in der Dichtung so ausgerichtet ist, dass im verspannten Zustand die lichte Weite entlang der Nebenachse gleich oder wenigstens im Wesentlichen gleich der lichten Weite der Hauptachse ist. Die Erfindung macht sich die Erkenntnis zunutze, dass beim Verspannen der Dichtung in Durchgangsrichtung eine Materialverdrängung nicht nur in radialer Richtung auftritt, sondern auch in tangentialer Richtung, also quer zur radialen Richtung, und quer zur (axialen) Durchgangsrichtung. Das komprimierbare Material der Dichtung weicht insbesondere dahin aus, wo der Widerstand gegen die Verformung am geringsten ist. In der Umgebung einer Durchgangsöffnung ist dies beispielsweise die Richtung, in welcher am wenigsten Dichtmaterial vorhanden ist. Dies hat zur Folge, dass bei den Dichtungen im Stand der Technik die im unverspannten Zustand runden Querschnitte der Durchgangsöffnungen im verspannten Zustand unrund, nämlich im Wesentlichen oval verformt werden. Hier setzt die Erfindung an und schlägt vor, die Durchgangsöffnungen bereits im unverspannten Zustand oval oder polygonal zu formen. Die ovale bzw. polygonale Form wird dadurch definiert, dass die ovale bzw. polygonale Durchgangsöffnung entlang einer Nebenachse die geringste lichte Weite aufweist, und entlang einer Hauptachse die größte lichte Weite aufweist.

In einer Ausführungsform der Erfindung mit einer oder mehreren im unverspannten Zustand polygonal geformten Durchgangsöffnungen weisen die Durchgangsöffnungen vorzugsweise fünf oder mehr Flächen auf. Es hat sich herausgestellt, dass auch die Verwendung solcher polygonalen Öffnungsquerschnitte einen guten Kompromiss zwischen einfacher Herstellbarkeit, der Möglichkeit, starke Übermaße zugunsten einer leichten Montierfähigkeit zu vermeiden, und gleichzeitig befriedigender Dichtwirkung liefern.

Vorzugsweise werden die Durchgangsöffnungen in der Dichtung so ausgerichtet, dass im verspannten Zustand die Abweichung der lichten Weite entlang der Nebenachse von der lichten Weite entlang der Hauptachse geringer ist als im unverspannten Zustand. Vorzugsweise ist die lichte Weite im verspannten Zustand entlang der Nebenachse gleich oder wenigstens im Wesentlichen gleich der lichten Weite entlang der Hauptachse. Geringfügige Abweichungen ergeben sich zwangsläufig aufgrund der gewählten Stärke der Verspannung und bleiben in den weiteren Betrachtungen unberücksichtigt. Im Fall der polygonalen Ausgestaltung der Durchgangsöffnung oder Durchgangsöffnungen werden diese selbstverständlich niemals exakt kreisrund verformt werden. Eine ausreichende "Rundheit" wird erfindungsgemäß daher für beide Arten der Durchgangsöffnungen (oval oder polygonal) dann angenommen, wenn die lichte Weite der Nebenachse im verspannten Zustand weniger stark von der lichten Weite der Hauptachse abweicht, als im unverspannten Zustand.

Somit beruht der Erfindungsgedanke darauf, die unweigerlich auftretende "Schubbewegung" des Dichtungsmaterials quer zur Verspannungsrichtung bewusst in Kauf zu nehmen und diese bei der Formgebung der Durchgangsöffnungen im unverspannten Zustand bereits zu berücksichtigen, so dass die Verdrängungsbewegung des komprimierbaren Materials beim Verspannen im Endeffekt dazu beiträgt, die gewollte, in der Schnittebene kreisrunde Querschnittsform herzustellen.

In einer bevorzugten Ausgestaltung der Erfindung weist die Dichtung einen Mittelpunkt auf, und die Durchgangsöffnung weist einen Mittelpunkt auf, und zwischen der Nebenachse und einer Radialachse, welche durch den Mittelpunkt der Durchgangsöffnung und den Mittelpunkt der Dichtung verläuft, ein Winkel von 45° oder weniger aufgespannt ist. Besonders bevorzugt ist zwischen der Radialachse und der Nebenachse ein Winkel von 25° oder weniger aufgespannt. Es hat sich herausgestellt, dass bei den vorangestellten bevorzugten Winkelbereichen ein zufriedenstellendes Dichtungsergebnis im verspannten Zustand, und somit eine zufriedenstellende "Rundheit" der Durchgangsöffnungen im verspannten Zustand erreicht wird.

Bei Dichtungen, in denen der vorgenannte Winkel 0° beträgt, fällt die Nebenachse der Durchgangsöffnung mit einer Achse durch der Radialachse durch den Mittelpunkt der Dichtung zusammen.

Vorzugsweise sind die Haupt- und Nebenachse zueinander rechtwinklig ausgerichtet.

In einer bevorzugten Ausführungsform der Verwendung weist die Dichtung eine im unverspannten Zustand in der Schnittebene kreisförmig ausgebildete Durchgangsöffnung auf, welche einen Mittelpunkt aufweist und dazu eingerichtet ist, eine Medienleitung in sich aufzunehmen und im verspannten Zustand gegen diese abzudichten. Beispielsweise kann diese im unverspannten Zustand kreisförmige Durchgangsöffnung größer ausgebildet sein als die im unverspannten Zustand oval oder polygonal geformten Durchgangsöffnung(en) und zum Durchführen und Abdichten einer Fluidleitung angepasst sein, während die kleinere(n), oval oder polygonal geformten Durchgangsöffnung(en) für elektrische Leitungen oder Lichtwellenleiter verwendet wird bzw. werden, oder Durchgangsöffnungen für Spannmittel wie beispielsweise Schrauben darstellen. Es hat sich gezeigt, dass die Verformungseinflüsse auf die im unverspannten Zustand kreisförmige Durchgangsöffnung(en) umso geringer sind, je größer diese sind, und je mittiger sie in der Dichtung angeordnet sind.

In einer bevorzugten Ausführungsform mit mehreren im unverspannten Zustand der Dichtung oval oder polygonal geformten Durchgangsöffnungen weisen die Nebenachsen der Durchgangsöffnungen einen gemeinsamen Schnittpunkt auf.

In einer weiteren bevorzugten Ausführungsform mit einer im unverspannten Zustand kreisförmig ausgebildeten Durchgangsöffnung spannt die Nebenachse bzw. spannen die Nebenachsen der einen oder mehreren oval oder polygonal geformten Durchgangsöffnungen mit einer Achse, welche durch den Mittelpunkt der Durchgangsöffnung und den Mittelpunkt der kreisförmigen Durchgangsöffnung verläuft, einen Winkel von 25° oder weniger auf. Falls die Dichtung mehrere im unverspannten Zustand kreisförmige Durchgangsöffnungen aufspannt, gilt die vorgenannte Bedingung vorzugsweise für zumindest eine, mehrere oder sämtliche dieser Durchgangsöffnungen. Gemäß einerweiteren Ausführungsform verlaufen die Nebenachse bzw. Nebenachsen der einen oder mehreren im unverspannten Zustand oval oder polygonal geformten Durchgangsöffnungen durch den Mittelpunkt der im unverspannten Zustand kreisförmigen Durchgangsöffnung. Der Mittelpunkt der kreisförmigen Durchgangsöffnung stellt mit anderen Worten den gemeinsamen Schnittpunkt der Nebenachsen der oval oder polygonal geformten Durchgangsöffnungen dar.

Gemäß einer alternativen bevorzugten Ausführungsform liegt der gemeinsame Schnittpunkt der Nebenachse(n) der ein oder mehreren im unverspannten Zustand oval oder polygonal geformten Durchgangsöffnung(en) in einem Bereich zwischen dem Mittelpunkt der Dichtung und dem Mittelpunkt der im unverspannten Zustand kreisförmigen Durchgangsöffnung. Besonders bevorzugt liegt der gemeinsame Schnittpunkt der Nebenachsen der im unverspannten Zustand oval oder polygonal geformten Durchgangsöffnungen auf einer Geraden zwischen dem Mittelpunkt der Dichtung und dem Mittelpunkt der im unverspannten Zustand kreisförmigen Durchgangsöffnung.

In bevorzugten, alternativen Ausführungsformen ist die kreisförmige Durchgangsöffnung in der Schnittebene mittig oder außermittig angeordnet. Bei einer mittigen Anordnung fallen die Mittelpunkte der im unverspannten Zustand kreisförmigen Durchgangsöffnung und der Dichtung zusammen.

Die Erfindung betrifft in einem weiteren Aspekt die Verwendung einer Hauseinführung, insbesondere Mehrspartenhauseinführung, zum Einsatz in einen Durchbruch einer Gebäudewand, insbesondere Hauswand, mit mindestens einer Aufnahme für eine Dichtung zum Abdichten gegen eine oder mehrere Medienleitungen, und einer in der Aufnahme eingesetzten Dichtung.

Die Erfindung löst die eingangs genannte Aufgabe bei der Verwendung einer solchen Hauseinführung, indem die Dichtung nach einer der hierin vorstehend beschriebenen bevorzugten Ausführungsformen ausgebildet ist. Die Hauseinführung gemäß der Erfindung macht sich somit deren Vorteile zunutze, weshalb bezüglich der Vorteile der Hauseinführung und ihrer bevorzugten Ausführungsformen auf die vorstehenden Erläuterungen verwiesen wird.

Die Erfindung wird im Folgenden anhand bevorzugter Ausführungsbeispiele und unter Bezugnahme auf die beigefügten Figuren näher erläutert. Hierbei zeigen:
- Figuren 1a - c: verschiedene Ansichten einer Dichtung gemäß dem Stand der Technik in unterschiedlichen Stadien,
- Figuren 2a - c: eine Dichtung gemäß einem ersten Ausführungsbeispiel der Erfindung in unterschiedlichen Zuständen,
- Figur 3: eine Detailansicht der Darstellung gemäß der Figur 2a,
- Figur 4: eine Draufsicht auf eine Dichtung gemäß einem zweiten Ausführungsbeispiel gemäß der Erfindung, und
- Figur 5: eine Draufsicht auf eine Dichtung gemäß einem dritten Ausführungsbeispiel gemäß der Erfindung.

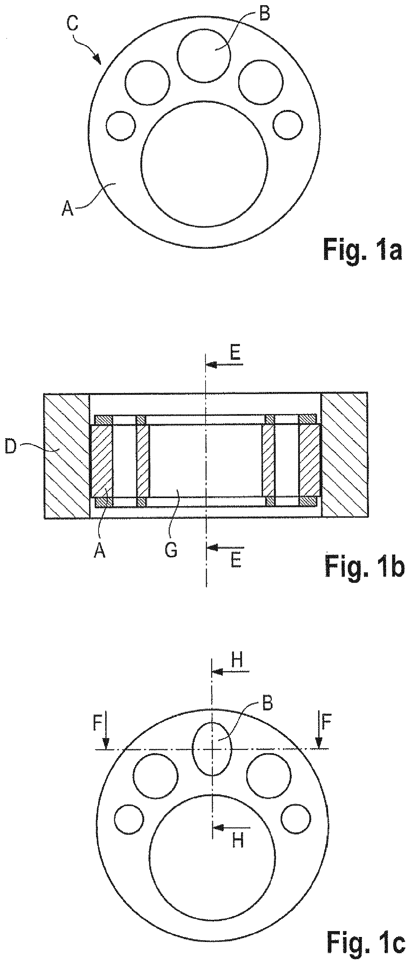

Die Erfindung wird im weiteren Verlauf in Gegenüberstellung zum bekannten Stand der Technik erläutert. Der Stand der Technik ist in den Figuren 1a, b und c vereinfacht abgebildet. Eine Dichtung C weist einen GrundkörperA auf. In dem Grundkörper A sind mehrere Durchgangsöffnungen B vorgesehen, durch welche in Durchgangsrichtung Medienleitungen hindurchführbar sind.

Eine solche Dichtung C wird in einer Aufnahme einer Hauseinführung D eingesetzt, siehe Figur 1b. Im Anschluss an das Einsetzen und gegebenenfalls Durchführen einer Medienleitung durch die Ausnehmung G wird die Dichtung C axial in Durchgangsrichtung verspannt, indem in Richtung der Pfeile E eine Kompressionskraft ausgeübt wird. Hierdurch dehnt sich der Grundkörper A der Dichtung C quer zur Verspannungsrichtung aus und kommt dichtend in Anlage mit der Hauseinführung D und gegebenenfalls mit der in Ausnehmung G eingeführten Medienleitung.

In Figur 1c ist dargestellt, wie sich diejenigen Durchgangsöffnungen B verhalten, in die nicht vor dem Verspannen bereits eine Medienleitung eingebracht wurde. In Richtung der Pfeile F hat die lichte Weite der Durchgangsöffnungen B deutlich stärker abgenommen als die lichte Weite der Richtungen der Pfeile H. Deswegen haben sich die Durchgangsöffnungen B oval verformt, wodurch sie mitunter nicht mehr in der Lage sind, gegen Medienleitungen mit rundem Querschnitt abzudichten, sofern diese Medienleitungen nicht im Verhältnis zum Durchmesser der Durchgangsöffnung B in unverspanntem Zustand mit deutlichem Übermaß versehen sind.

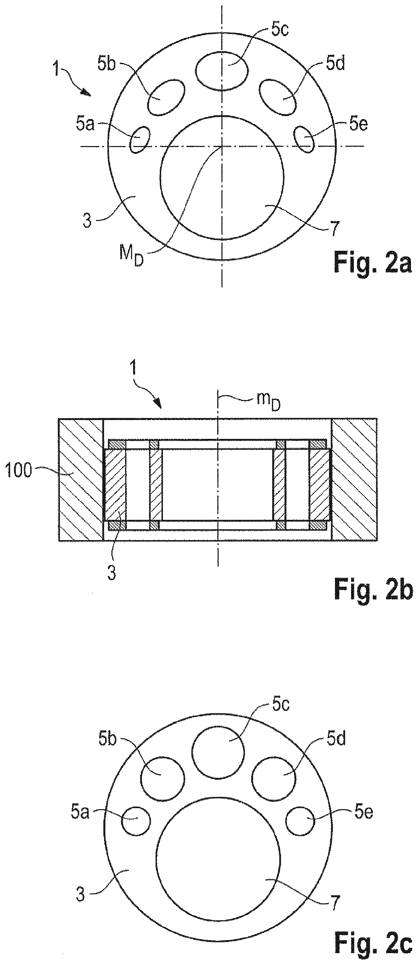

Die Erfindung wird im Kontrast dazu anhand der folgenden Figuren dargestellt. Die Anordnung der Figuren 2a, b und c entspricht in ihren Stadien der Darstellung der Figuren 1a - c. In Figur 2a ist eine erfindungsgemäße Dichtung 1 in unverspanntem Zustand in einer Draufsicht dargestellt. Der Betrachter blickt in Durchgangsrichtung auf die Dichtung 1 in Figur 2a. Die Dichtung 1 weist einen Grundkörper 3 auf, der aus einem elastisch komprimierbaren Material besteht. In den Grundkörper 3 der Dichtung 1 sind mehrere Durchgangsöffnungen 5a, b, c, d, e eingebracht, welche sich in Durchgangsrichtung erstrecken. Die Durchgangsöffnungen 5a - e sind oval geformt.

Die Dichtung 1 weist ferner eine weitere, im Vergleich zu den Durchgangsöffnungen 5a - e größer dimensionierte Durchgangsöffnung 7 mit in unverspanntem Zustand kreisrundem Öffnungsquerschnitt in Durchgangsrichtung auf. Die Durchgangsöffnungen 5a - e sowie die Durchgangsöffnung 7 in dem Ausführungsbeispiel gemäß Figur 2a sind außermittig relativ zu der dem Mittelpunkt M_{D} angeordnet.

Durch den Mittelpunkt M_{D} erstreckt sich in Durchgangsrichtung die Mittenachse m_{D}, siehe Figur 2b. Beim Komprimieren der Dichtung 1 nach Einsetzen in eine entsprechende Aufnahme einer Hauseinführung 100 verhält sich die Dichtung 1 im Wesentlichen so wie die Dichtung aus dem Stand der Technik. Das komprimierbare Material des Grundkörpers 3 weicht quer zur Verspannrichtung entlang der Mittenachse m_{D} aus.

Da die Durchgangsöffnungen 5a - e allerdings gemäß Figur 2a im unverspannten Zustand oval geformt und entsprechend ausgerichtet waren, bewirkt das seitliche Ausweichen des elastisch komprimierbaren Materials des Grundkörpers 3, dass im verspannten Zustand gemäß Figur 2c die Durchgangsöffnungen 5a, b, c, d und e einen in der Schnittebene im Wesentlichen kreisförmigen Querschnitt einnehmen. In diesem Zustand ist die Dichtfunktion bezüglich adäquat dimensionierter Medienleitungen einwandfrei gewährleistet.

Die optionale zusätzliche Durchgangsöffnung 7 mit in unverspanntem Zustand kreisförmigem Querschnitt ist im verspannten Zustand zwar nicht mehr strikt kreisförmig ausgebildet. Allerdings ist aufgrund ihrer vergleichsweise großen lichten Weite die Verformung nach dem Verspannen geringer, als dies bei den Durchgangsöffnungen 5a-e der Fall wäre, wenn die Durchgangsöffnungen 5a-e im unverspannten Zustand nicht oval bzw. polygonal vorgeformt wären.

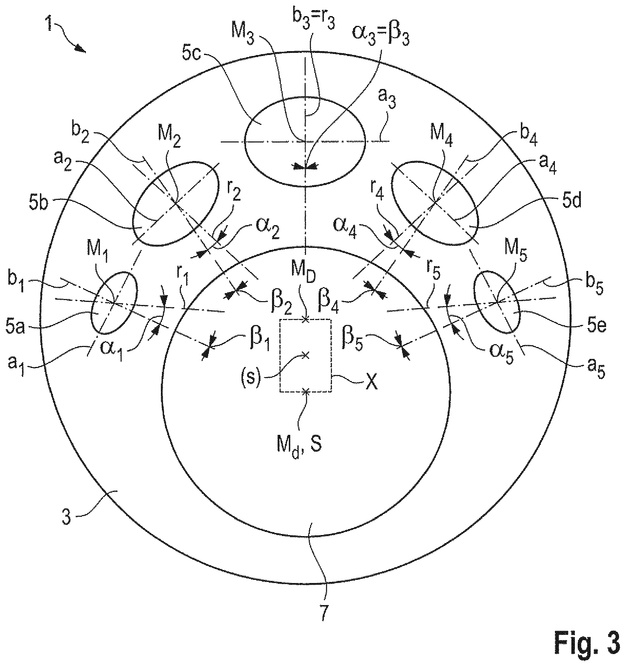

Eine vergrößerte Ansicht der Darstellung gemäß 2a ist in Figur 3 mit weiteren Erläuterungen und Bezugszeichen wiedergegeben. Die Durchgangsöffnungen 5a - e weisen jeweils einen Mittelpunkt Mᵢ auf, wobei "i" als Platzhalter für eine Indexzahl 1 - 5 der jeweiligen Durchgangsöffnung steht. Der Mittelpunkt Mᵢ ist der Schnittpunkt der Hauptachse aᵢ mit der Nebenachse bᵢ, wobei entlang der Hauptachse die jeweilige Durchgangsöffnung ihre größte lichte Weite einnimmt, und entlang der Nebenachse bᵢ ihre geringste lichte Weite.

Die Haupt- und Nebenachsen aᵢ, bᵢ der Durchgangsöffnungen 5a - e sind derart ausgerichtet, dass beim Übergang vom Zustand gemäß Figur 2a und 3 in dem verspannten Zustand gemäß Figur 2c eine Materialverdrängung dahingehend stattfindet, dass im verspannten Zustand die lichten Weiten entlang der Haupt- und Nebenachsen aᵢ, bᵢ im Wesentlichen gleich sind, vorzugsweise exakt gleich sind.

Zumindest einige der Nebenachsen bᵢ der Durchgangsöffnungen 5a - e treffen sich vorzugsweise in einem gemeinsamen Schnittpunkt S. Der gemeinsame Schnittpunkt S der Nebenachsen bᵢ aller Durchgangsöffnungen 5a - e liegt vorzugsweise in einem Bereich X zwischen einem Mittelpunkt M_{d} der Durchgangsöffnung 7 mit kreisförmigem Querschnitt und einem Mittelpunkt M_{D} der Dichtung 1. Da die Durchgangsöffnung 7 in der Dichtung 1 außermittig im Grundkörper 3 in der Schnittebene platziert ist, ist ihr Mittelpunkt M_{d} relativ zu dem Mittelpunkt M_{D} der Dichtung 1 beabstandet.

Die Durchgangsöffnungen 5a - e sind so ausgerichtet, dass ihre Nebenachse bᵢ einen Winkel mit einer Radiallinie durch die Mittenpunkte Mᵢ der Durchgangsöffnungen 5a - e und den Mittelpunkt M_{D} der Dichtung 1 aufspannt. Der Winkel αᵢ liegt in einem Bereich von 45° oder geringer, vorzugsweise in einem Bereich von 25° oder geringer.

Wenn der gemeinsame Schnittpunkt S einiger oder sämtlicher der Nebenachsen bᵢ im vorliegenden Fall gleich dem Mittelpunkt M_{d} derweiteren Durchgangsöffnung 7 ist, beträgt der zwischen den Nebenachsen bᵢ und einer jeweiligen Radiallinie durch den Mittelpunkt Mᵢ der Durchgangsöffnungen 5a - e und dem Mittelpunkt der im unverspannten Zustand kreisförmigen Durchgangsöffnung 7 aufgespannte Winkel βᵢ = 0°. Wenn der gemeinsame Schnittpunkt der Nebenachsen bᵢ der Durchgangsöffnungen 5a - e auch von dem Mittelpunkt M_{d} der Durchgangsöffnung 7 beabstandet ist, ist der Winkel βᵢ ungleich 0°.

Die Durchgangsöffnungen 5a - e und 7 bei der Dichtung 1 gemäß dem ersten Ausführungsbeispiel sind vornehmlich zur Durchführung von Medienleitungen dimensioniert. Wie weiter oben bereits erörtert wurde, betrifft die Erfindung allerdings nicht bloß die Ausgestaltung von Durchgangsöffnungen für Medienleitungen, sondern in gleicher Weise auch die Ausgestaltung von Durchgangsöffnungen für Spannmittel, die zum Verspannen der Dichtung in Axialrichtung bzw. Durchgangsrichtung verwendet werden.

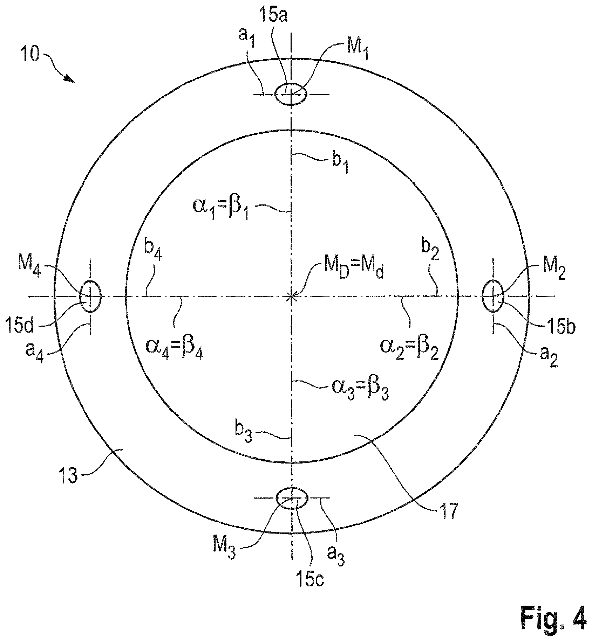

In Figur 4 ist ein zweites Ausführungsbeispiel in Form einer Dichtung 10 schematisch dargestellt. Der Spannvorgang vollzieht sich bei diesem Ausführungsbeispiel in exakt gleicher Weise wie bei dem ersten Ausführungsbeispiel der Dichtung 1 gemäß den Figuren 2a - c und 3. Vor diesem Hintergrund wird auf die Darstellung des Spannvorgangs selbst und das Abbild der Dichtung 10 im verspannten Zustand verzichtet. Die Dichtung 10 weist einen Grundkörper 13 auf. In den Grundkörper 13 sind mehrere Durchgangsöffnungen 15a, b, c, d für Spannmittel sowie eine weitere Durchgangsöffnung 17 für eine Medienleitung eingebracht. Die Durchgangsöffnungen sind wie beim vorigen Ausführungsbeispiel in Durchgangsrichtung orientiert.

Die Durchgangsöffnungen 15a - d sind im unverspannten Zustand oval geformt und weisen jeweils eine Hauptachse aᵢ auf, entlang derer die Durchgangsöffnung 15a - d ihre größte lichte Weite einnimmt, sowie eine Nebenachse bᵢ, entlang welcher die Durchgangsöffnung 15a - d ihre geringste lichte Weite einnimmt. Das Indexzeichen i steht auch hier für eine laufende Nummer der jeweiligen in Figur 4 dargestellten Durchgangsöffnungen und nimmt einen Wert von 1 bis 4 ein. Die Durchgangsöffnungen 15a - d sind relativ zum Mittelpunkt M_{D} der Dichtung 10 außermittig angeordnet, allerdings gleichmäßig entlang des Umfangs des ringförmigen Grundkörpers 13 verteilt. Eine weitere Durchgangsöffnung 17 ist in der Dichtung 10 vorgesehen, welche mittig relativ zum Mittelpunkt M_{D} angeordnet ist, sodass die Mittelpunkte M_{D} und ein Mittelpunkt M_{d} der Dichtung mit der Durchgangsöffnung 17 zusammenfallen.

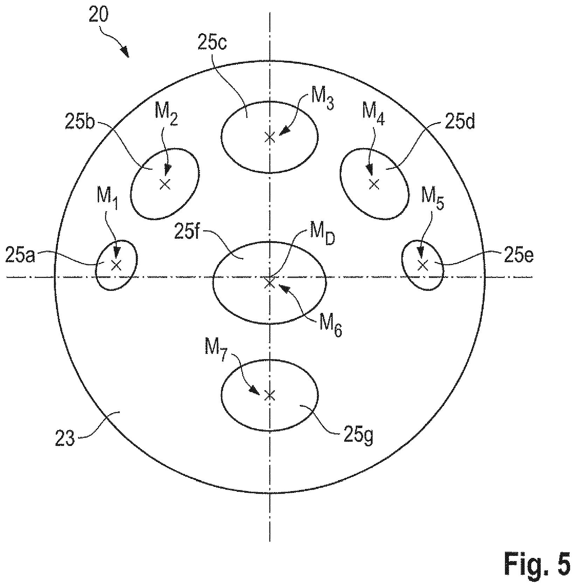

In Figur 5 ist eine Dichtung 20 gezeigt. Die Dichtung 20 ist strukturell eng verwandt mit Dichtung 1 gemäß Figuren 2a - c und weist einen Grundkörper 23 auf, in dem mehrere Durchgangsöffnungen 25a-g ausgebildet sind. Als nennenswerter Unterschied sei an dieser Stelle hervorgehoben, dass anstelle der kreisrunden Durchgangsöffnung 7 der Dichtung 1 hier bei der Dichtung 20 mehrere weitere Durchgangsöffnungen 25f, g vorgesehen sind, welche im unverspannten Zustand oval geformt sind. Hinsichtlich der Mittelpunkte Mᵢ der Durchgangsöffnungen 25a - g und der durch sie verlaufenden Haupt- und Nebenachsen gelten die gleichen Bedingungen wie in Bezug auf die Durchgangsöffnungen 5a-e der Dichtung 1 gemäß Figur 3. Dasselbe gilt auch bezüglich der winkligen Ausrichtung der Nebenachsen der Durchgangsöffnungen 5 a-e bzw. 25a-g, wobei letztere der Übersichtlichkeit halber in Figur 5 nicht dargestellt sind. Auch diesbezüglich wird zur Veranschaulichung auf Figur 3 verwiesen.

Die beiden zusätzlichen Durchgangsöffnungen 25f, g sind gemeinsam mit der Durchgangsöffnung 5c in einer Symmetrieebene angeordnet, welche auch durch den Mittelpunkt M_{D} der Dichtung 20 verläuft. Der Grundkörper 23 der Dichtung 20 ist vorzugsweise aus einem homogenen Material hergestellt.

Das zweite Ausführungsbeispiel unterscheidet sich im Detail lediglich darin vom ersten Ausführungsbeispiel, dass der Winkel zwischen den Nebenachsen bᵢ und den jeweiligen Radiallinien durch die Mittelpunkte Mᵢ und den Mittelpunkt M_{D} bzw. M_{d} der Dichtung bzw. der kreisförmigen Durchgangsöffnung 17 gleich 0 ist.

Wenngleich die Durchgangsöffnungen 15a - d gemäß dem zweiten Ausführungsbeispiel vorstehend unter Bezugnahme auf die Verwendung mit Spannmitteln erörtert wurden, und die Durchgangsöffnungen 5a - e für das erste Ausführungsbeispiel nur im Zusammenhang mit einer Verwendung für Medienleitungen erörtert wurden, so wird selbstverständlich verstanden, dass eine erfindungsgemäße Dichtung auch sowohl Durchgangsöffnungen für Medienleitungen wie auch Durchgangsöffnungen für Spannmittel aufweisen kann, welche jeweils im unverspannten Zustand bereits erfindungsgemäß oval geformt sind.

## Patentansprüche

1. Verwendung einer Dichtung (1, 10) zum Abdichten gegen Medienleitungen, die von außen in ein Gebäude hinein verlegt werden, mit einem runden Querschnitt, wobei die Dichtung
- eine Durchgangsrichtung (m_{D}) für Medienleitungen aufweist,
- zumindest teilweise aus einem elastisch komprimierbaren Material besteht, und
- dazu eingerichtet ist, mittels Verspannen der Dichtung in Durchgangsrichtung eine Dichtwirkung zu erzeugen,
- mindestens eine in einer Schnittebene quer zur Durchgangsrichtung außermittig angeordnete Durchgangsöffnung (5a-e; 15a-d) zur Aufnahme von Medienleitungen und/oder Spannmitteln in Durchgangsrichtung aufweist,
**dadurch gekennzeichnet, dass**
- die Durchgangsöffnung (5a-e; 15a-d) im unverspannten Zustand in der Schnittebene oval oder polygonal geformt ist, wobei die ovale oder polygonale Durchgangsöffnung (5a-e; 15a-d) die geringste lichte Weite entlang einer Nebenachse (bᵢ) und die größte lichte Weite entlang einer Hauptachse (aᵢ) aufweist, und die Durchgangsöffnung (5a-e; 15a-d) in der Dichtung so ausgerichtet ist, dass im verspannten Zustand die lichte Weite entlang der Nebenachse gleich oder wenigstens im Wesentlichen gleich der lichten Weite der Hauptachse ist.

2. Verwendung nach Anspruch 1,
wobei die Dichtung einen Mittelpunkt (M_{D}) aufweist, die Durchgangsöffnung einen Mittelpunkt (Mᵢ) aufweist, und zwischen der Nebenachse (bᵢ) und einer Radialachse (rᵢ,) welche durch den Mittelpunkt (Mᵢ) der Durchgangsöffnung und den Mittelpunkt (M_{D}) der Dichtung verläuft, ein Winkel von 45° oder weniger aufgespannt ist.

3. Verwendung nach Anspruch 1 oder 2,
wobei die Haupt- und Nebenachse (aᵢ; bᵢ) zueinander rechtwinklig ausgerichtet sind.

4. Verwendung nach einem der vorstehenden Ansprüche,
wobei die Durchgangsöffnung (5a-e; 15a-d) im unverspannten Zustand im Wesentlichen elliptisch geformt ist.

5. Verwendung nach einem der vorstehenden Ansprüche,
mit einer im unverspannten Zustand in der Schnittebene kreisförmig ausgebildeten Durchgangsöffnung (7, 17), welche einen Mittelpunkt M_{d} aufweist, und dazu eingerichtet ist, eine Medienleitung in sich aufzunehmen und in verspanntem Zustand gegen diese abzudichten.

6. Verwendung nach einem der vorstehenden Ansprüche,
mit mehreren im unverspannten Zustand der Dichtung oval oder polygonal geformten Durchgangsöffnungen (5a-e; 15a-d), wobei zumindest einige der Nebenachsen (bᵢ) der Durchgangsöffnungen einen gemeinsamen Schnittpunkt S aufweisen.

7. Verwendung nach Anspruch 5 oder 6,
wobei die Nebenachse bzw. Nebenachsen (bᵢ) der einen oder mehreren im unverspannten Zustand oval oder polygonal geformten Durchgangsöffnungen (15a-d) mit einer Achse, welche durch den Mittelpunkt der Durchgangsöffnung (Mᵢ) und den Mittelpunkt (M_{d}) der kreisförmigen Durchgangsöffnung verläuft, einen Winkel (βᵢ) von 25° oder weniger aufspannt.

8. Verwendung nach einem der Ansprüche 5 bis 7,
wobei die Nebenachse bzw. Nebenachsen der einen oder mehreren im unverspannten Zustand oval oder polygonal geformten Durchgangsöffnungen durch den Mittelpunkt M_{d} der im unverspannten Zustand kreisförmigen Durchgangsöffnung verläuft bzw. verlaufen.

9. Verwendung nach einem der Ansprüche 5 bis 7,
wobei der gemeinsame Schnittpunkt der Nebenachse(n) (bᵢ) der mehreren im unverspannten Zustand oval oder polygonal geformten Durchgangsöffnung(en) (15a-d) in einem Bereich zwischen dem Mittelpunkt (M_{D}) der Dichtung und dem Mittelpunkt (M_{d}) der im unverspannten Zustand kreisförmigen Durchgangsöffnung liegt, besonders bevorzugt auf einer Geraden zwischen dem Mittelpunkt der Dichtung (M_{D}) und dem Mittelpunkt (M_{d}) der im unverspannten Zustand kreisförmigen Durchgangsöffnung.

10. Verwendung nach einem der Ansprüche 5 bis 9,
wobei die kreisförmige Durchgangsöffnung (7) in der Schnittebene außermittig angeordnet ist.

11. Verwendung nach einem der Ansprüche 5 bis 9,
wobei die kreisförmige Durchgangsöffnung (17) in der Schnittebene mittig angeordnet ist.

12. Verwendung nach einem der vorstehenden Ansprüche,
wobei die Dichtung zum Einsatz in eine korrespondierende Aufnahme einer Hauseinführung, insbesondere Mehrspartenhauseinführung, eingerichtet ist.

13. Verwendung nach einem der Ansprüche 1 bis 11,
wobei die Dichtung zum Einsatz in einem Durchbruch einer Gebäudewand, insbesondere Hauswand, eingerichtet ist.

## Claims

1. Use of a seal (1, 10) for sealing with respect to media lines which are laid from the exterior into a building, having a round cross-section, wherein the seal
- has a passage direction (m_{D}) for media lines,
- at least partially comprises a resiliently compressible material, and
- is configured to produce a sealing action by clamping the seal in the passage direction,
- has at least one through-opening (5a-e; 15a-d) which is arranged eccentrically in a plane of section transversely relative to the passage direction for receiving media lines and/or clamping means in the passage direction,
**characterised in that**
the through-opening (5a-e; 15a-d) in the non-tensioned state in the plane of section is formed in an oval or polygonal manner, wherein the oval or polygonal through-opening (5a-e; 15a-d) has the smallest clear width along a minor axis (bᵢ) and the largest clear width along a main axis (aᵢ), and the through-opening (5a-e; 15a-d) in the seal is orientated in such a manner that in the tensioned state the clear width along the minor axis is equal to or at least substantially equal to the clear width of the main axis.

2. Use according to claim 1,
wherein the seal has a centre (M_{D}), the through-opening has a centre (Mᵢ), and between the minor axis (bᵢ) and a radial axis (rᵢ), which extends through the centre (Mᵢ) of the through-opening and the centre (M_{D}) of the seal, an angle of 45° or less is defined.

3. Use according to claim 1 or 2,
wherein the main axis and minor axis (aᵢ; bᵢ) are orientated at right-angles with respect to each other.

4. Use according to any one of the preceding claims,
wherein the through-opening (5a-e; 15a-d) in the non-tensioned state is formed in a substantially elliptical manner.

5. Use according to any one of the preceding claims,
having a through-opening (7, 17) which is constructed in a circular manner in the non-tensioned state in the plane of section and which has a centre M_{d} and which is configured to receive a media line therein and to seal with respect to this in a tensioned state.

6. Use according to any one of the preceding claims
having a plurality of through-openings (5a-e; 15a-d) which are formed in an oval or polygonal manner in the non-tensioned state of the seal, wherein at least some of the minor axes (bᵢ) of the through-openings have a common point of intersection S.

7. Use according to claim 5 or 6,
wherein the minor axis or minor axes (bᵢ) of the one or more through-openings (15a-d) which are formed in an oval or polygonal manner in the non-tensioned state defines an angle (βᵢ) of 25° or less with an axis which extends through the centre of the through-opening (Mᵢ) and the centre (M_{d}) of the circular through-opening.

8. Use according to any one of claims 5 to 7,
wherein the minor axis or minor axes of the one or more through-openings which are formed in an oval or polygonal manner in the non-tensioned state extend(s) through the centre M_{d} of the through-opening which is circular in the non-tensioned state.

9. Use according to any one of claims 5 to 7,
wherein the common point of intersection of the minor axis/ axes (bᵢ) of the plurality of through-openings (15a-d) which are formed in an oval or polygonal manner in the non-tensioned state is located in a region between the centre (M_{D}) of the seal and the centre (M_{d}) of the through-opening which is circular in the non-tensioned state, particularly preferably on a straight line between the centre of the seal (M_{D}) and the centre (M_{d}) of the through-opening which is circular in the non-tensioned state.

10. Use according to any one of claims 5 to 9,
wherein the circular through-opening (7) is arranged eccentrically in the plane of section.

11. Use according to any one of claims 5 to 9,
wherein the circular through-opening (17) is arranged centrally in the plane of section.

12. Use according to any one of the preceding claims,
wherein the seal is configured for use in a corresponding receiving member of a house lead-in, in particular a multifunction house lead-in.

13. Use according to any one of claims 1 to 11,
wherein the seal is configured for use in an opening of a building wall, in particular a house wall.

## Revendications

1. Utilisation d'un joint d'étanchéité (1, 10) pour assurer une étanchéité par rapport à des conduites de milieux, qui sont posées de l'extérieur à l'intérieur d'un bâtiment, avec une section transversale ronde, dans laquelle le joint d'étanchéité
- présente une direction de passage (m_{D}) pour les conduites de milieux,
- est constitué au moins en partie d'un matériau pouvant être comprimé élastiquement, et
- est conçu pour produire une action d'étanchéité au moyen d'un serrage du joint d'étanchéité dans la direction de passage,
- présente au moins une ouverture de passage (5a-e ; 15a-d) disposée de façon excentrée dans un plan de coupe transversalement par rapport à la direction de passage pour la réception de conduites de milieu et/ou de moyens de serrage dans la direction de passage, **caractérisée en ce que**
- l'ouverture de passage (5a-e ; 15a-d) est formée de manière ovale ou polygonale dans l'état non serré dans le plan de coupe, dans laquelle l'ouverture de passage (5a-e ; 15a-d) ovale ou polygonale présente le plus petit diamètre intérieur le long d'un petit axe (bᵢ) et le plus grand diamètre intérieur le long d'un grand axe (aᵢ), et l'ouverture de passage (5a-e ; 15a-d) est orientée dans le joint d'étanchéité, de sorte que dans l'état serré le diamètre intérieur le long du petit axe est égal ou au moins sensiblement égal au diamètre intérieur du grand axe.

2. Utilisation selon la revendication 1,
dans laquelle le joint d'étanchéité présente un centre (M_{D}), l'ouverture de passage présente un centre (Mᵢ), et un angle de 45° ou moins est tendu entre le petit axe (bᵢ) et un axe radial (rᵢ), lequel s'étend à travers le centre (Mᵢ) de l'ouverture de passage et le centre (M_{D}) du joint d'étanchéité.

3. Utilisation selon la revendication 1 ou 2,
dans laquelle les grand et petit axes (aᵢ ; bᵢ) sont orientés perpendiculairement l'un à l'autre.

4. Utilisation selon l'une quelconque des revendications précédentes,
dans laquelle l'ouverture de passage (5a-e ; 15a-d) dans l'état non serré est sensiblement de forme elliptique.

5. Utilisation selon l'une quelconque des revendications précédentes,
avec une ouverture de passage (7, 17) réalisée de manière circulaire dans le plan de coupe dans l'état non serré, laquelle présente un centre M_{d}, et est conçue pour recevoir en elle-même une conduite de milieux et pour assurer une étanchéité par rapport à celle-ci dans l'état serré.

6. Utilisation selon l'une quelconque des revendications précédentes,
avec plusieurs ouvertures de passage (5a-e ; 15a-d) formées de manière ovale ou polygonale dans l'état non serré du joint d'étanchéité, dans laquelle au moins certains des petits axes (bᵢ) des ouvertures de passage présentent un point de coupe S commun.

7. Utilisation selon la revendication 5 ou 6,
dans laquelle le petit axe ou les petits axes (bᵢ) des une ou plusieurs ouvertures de passage (15a-d) formées de manière ovale ou polygonale dans l'état non serré sous-tendent un angle (βᵢ) de 25° ou moins avec un axe, lequel s'étend à travers le centre de l'ouverture de passage (Mᵢ) et le centre (M_{d}) de l'ouverture de passage circulaire.

8. Utilisation selon l'une quelconque des revendications 5 à 7,
dans laquelle le petit axe ou les petits axes des une ou plusieurs ouvertures de passage formées de manière ovale ou polygonale dans l'état non serré s'étend ou s'étendent à travers le centre M_{d} de l'ouverture de passage circulaire dans l'état non serré.

9. Utilisation selon l'une quelconque des revendications 5 à 7,
dans laquelle le point de coupe commun du petit (des petits) axe(s) (bᵢ) des plusieurs ouvertures de passage (15a-d) formées de manière ovale ou polygonale dans l'état non serré se situe dans une zone entre le centre (M_{D}) du joint d'étanchéité et le centre (M_{d}) de l'ouverture de passage circulaire dans l'état non serré, de manière particulièrement préférée sur une droite entre le centre du joint (M_{D}) et le centre (M_{d}) de l'ouverture de passage circulaire dans l'état non serré.

10. Utilisation selon l'une quelconque des revendications 5 à 9,
dans laquelle l'ouverture de passage (7) circulaire est disposée de manière excentrée dans le plan de coupe.

11. Utilisation selon l'une quelconque des revendications 5 à 9,
dans laquelle l'ouverture de passage (17) circulaire est disposée de manière centrale dans le plan de coupe.

12. Utilisation selon l'une quelconque des revendications précédentes,
dans laquelle le joint d'étanchéité est conçu pour être inséré dans un logement correspondant d'une entrée de maison, en particulier entrée de maison polyvalente.

13. Utilisation selon l'une quelconque des revendications 1 à 11,
dans laquelle le joint d'étanchéité est conçu pour être inséré dans une percée d'un mur de bâtiment, en particulier mur de maison.
